# EUROPÄISCHE PATENTSCHRIFT

(11) **EP 0 811 871 B1**
(45) Veröffentlichungstag und Bekanntmachung des Hinweises auf die Patenterteilung: **26.04.2006**
(21) Anmeldenummer: 97108264.9
(22) Anmeldetag: 22.05.1997
(51) Int. Cl.: G02F 1/153, G02F 1/15, G02F 1/155

(54) **Elektrochrome Einheit**
Electrochromic unit
Unité électrochromique

(30) Priorität: 05.06.1996 DE 19622600
(43) Veröffentlichungstag der Anmeldung: 10.12.1997
(73) Patentinhaber: Fraunhofer-Gesellschaft zur Förderung der angewandten Forschung e.V., 80686 München (DE)
(72) Erfinder: Hambitzer, Günther Dr. rer. nat., D-76327 Pfinztal (DE); Stassen, Ingo Dr. rer. nat., D-76229 Karlsruhe (DE); Schmidt, Clemens Dipl.-Ing., D-76356 Weingarten (DE); Dörflinger, Ulrike Dipl.-Ing., D-76327 Pfinztal (DE)

(56) Entgegenhaltungen:
- EP-A- 0 028 147
- EP-A- 0 035 766
- WO-A-94/16356
- FR-A- 2 577 937
- US-A- 4 215 917
- US-A- 4 448 493

## Beschreibung

Die Erfindung betrifft eine elektrochrome Einheit mit einer elektrochemischen Zelle mit zumindest zwei Elektroden, einem zwischen den Elektroden angeordneten Ionenleiter sowie mit einem elektrochromen Material.

Bei bisher bekannten elektrochromen Einheiten handelt es sich um elektrochrome Fenster mit transparenten Systemen, die sich auf Wunsch einfärben lassen. Sie dienen dazu, einfallende elektromagnetische Strahlung, vorzugsweise sichtbares Licht, zu absorbieren. Ihr Einsatzgebiet liegt beispielsweise im Automobilbereich, wo sie in Form von abblendbaren Rückspiegeln Verwendung finden. Hierzu weisen die elektrochromen Fenster zunächst eine elektrochemische Zelle mit zwei Elektroden sowie einem dazwischen angeordneten Elektrolyten auf, wobei die Elektroden jeweils auf einem eigenen Träger aufgebracht sind und zumindest ein Träger sowie eine Elektrode transparent sind. Auf die transparente Elektrode wird dann zwischen Elektrode und Elektrolyt das elektrochrome Material aufgebracht. Als transparenter Träger wird normalerweise Glas verwendet, welches dann mit der transparenten Elektrode beschichtet wird. Bei dem elektrochromen Material handelt es sich zumeist um Übergangsmetalloxide, beispielsweise Wolframoxid. Ein solches Fenster mit Wolframoxid als anorganischem, elektrochromem Material wird im Fensterbau eingesetzt werden, wo das Wolframoxid zwischen zwei Fensterscheiben eingebracht wird und zur Abdunkelung der gesamten Scheibe zur Verminderung der Sonneneinstrahlung dient. Der Elektrolyt ist stets ein Ionenleiter und befindet sich zwischen dem elektrochromen Material, z.B. Wolframoxid, und der zweiten, parallel zur ersten angeordneten Elektrode. Aufgrund dieser Anordnung (transparenter Träger/erste transparente Elektrode/elektrochromes Material/Elektrolyt/zweite Elektrode/Träger) ist sichergestellt, daß der Elektrolyt und das elektrochrome Material stets in innigem Kontakt miteinander stehen, damit bei Stromfluß ein Stoffaustausch zwischen beiden stattfinden kann. Durch eine angelegte Spannung werden nun Ladungen in das elektrochrome Material injiziert, wodurch die gewünschte Farbveränderung hervorgerufen wird. Nachteilig ist jedoch, daß zum Einfärben bzw. Entfärben des Fensters jeweils mehrere Minuten notwendig sind.

Neben den Metalloxiden werden als elektrochrome Materialien elektrisch leitende Polymere eingesetzt. Auch hier werden durch einen Stromfluß zwischen den Elektroden Ladungen in das Polymer injiziert, die eine Farbänderung bewirken. Als transparente Elektrode wird dabei zumeist Indium-Zinnoxid verwendet, auf die dann das elektrochrome Polymer aufgetragen wird. Als Ionenleiter werden azidische Elektrolyte benötigt, der dann wiederum die zweite Elektrode, die zumeist ebenfalls transparent ist, folgt. Diese Art von Fenstern weisen jedoch eine mangelhafte Langzeitstabilität auf, da die azidischen Elektrolyte in bezug auf die transparente Elektrode korrosiv wirken. Letztere verliert mit der Zeit allmählich ihre elektrische Leitfähigkeit, so daß das elektrochrome Material nicht mehr aktiviert werden kann. Das elektrochrome Fenster kann deshalb im Laufe der Zeit seine Funktion nicht mehr erfüllen.

Die Offenlegungsschrift WO94/16356 offenbart eine elektrochrome Einheit nach dem Obergriff des Anspruchs 1.

Der Erfindung liegt die Aufgabe zugrunde, eine elektrochrome Einheit der eingangs genannten Art zu schaffen, bei der auf transparente Träger sowie transparente Elektroden verzichtet werden kann und welche sich bei schnellen Schaltzeiten durch eine hohe Langzeitstabilität auszeichnet.

Erfindungsgemäß wird die genannte Aufgabe durch eine elektrochrome Einheit nach Anspruch 1 gelöst. Diese erfindungsgemäße elektrochrome Einheit zeichnet sich also im Gegensatz zu einem elektrochromen Fenster durch einen völlig neuartigen Aufbau aus, bei dem das elektrochrome Polymer außerhalb der elektrochemischen Zelle aus Elektroden und protonenleitender Membran angeordnet ist. Da das elektrochrome Material nun außen liegt, entfällt die Notwendigkeit transparenter Träger und Elektroden völlig. Dieses neue elektrochrome System baut dabei auf der protonenleitenden PEM-Membran (PEM = englisch: Proton Exchange Membrane) auf, die zum einen als Träger für die Elektroden bzw. elektrischen Kontaktierungen und zum anderen als Festionenleiter dient, der den Ladungstransport zwischen den beiden Elektroden ermöglicht. Ein weiterer separater Träger für die Elektroden wie beim Stand der Technik entfällt ebenfalls. Da die Elektroden nun nicht mehr transparent sein müssen, erweitert sich die Anzahl der möglichen Elektrodenmaterialien erheblich. Entsprechend können Elektroden höherer Korrosionsbeständigkeit verwendet werden, als dies bei den bisher verfügbaren transparenten Elektrodenmaterialien, wie z.B. Indium-Zinnoxid, der Fall war. Entsprechend weist die neue, erfindungsgemäße elektrochrome Einheit eine hohe Langzeitstabilität auf.

In bevorzugter Ausgestaltung ist vorgesehen, daß die protonenleitende Membran in Form einer festen Folie ausgebildet ist. Dadurch, daß nun auf die Folie die Elektroden und auf eine Elektrode das elektrochrome Polymer aufgebracht werden, kann so insgesamt ein flexibles, biegsames elektrochromes System geschaffen werden. Hierdurch ergeben sich breitere Anwendungsfelder, als dies bei den bisherigen, aufgrund der Trägermaterialien starren, unflexiblen elektrochromen Fenstern der Fall war. Die protonenleitende Membran besteht vorzugsweise aus einem Fluorpolymer, an dessen Seitenketten Sulfonsäuregruppen angebracht sind. Eine solche Membran ist unter dem Handelsnamen Nafion erhältlich. Es ist aber auch eine Membran aus jedem anderen geeigneten Material einsetzbar. Die Schichtdicke der Membran beträgt maximal 100 µm. Bevorzugt ist eine Dicke von 10 µm und weniger.

Bei den Elektroden, die nun nicht mehr transparent sein müssen, handelt es sich bevorzugt um solche aus Metall wie Gold oder Platin. Diese Metalle weisen eine bedeutend höhere Korrosionsbeständigkeit als die bisher verfügbaren transparenten Elektrodenmaterialien auf und können in Form elektrischer Kontaktierungen beidseitig auf die protonenleitende Membran aufgebracht werden. Das Aufbringen der Elektroden bzw. elektrischen Kontaktierungen auf die ionenleitende Schicht bzw. PEM-Membran erfolgt dabei vorzugsweise durch Bedampfen aus der Gasphase. Alternativ ist es auch möglich, eine Seite der protonenleitenden Membran durch einfaches Aufpressen eines Metallnetzes oder eines Metall-beschichteten Netzes elektrisch zu kontaktieren. Dieses alternative Verfahren ist jedoch nur für die Gegenelektrode einsetzbar. Durch Bedampfen aus der Gasphase ist es nun möglich, die die Elektroden bildende Metallschicht so dünn aufzutragen, daß die Metallschicht optisch transparent erscheint, aber immer noch elektrische Leitung erlaubt. Insbesondere ist es auf diese Weise möglich, dafür zu sorgen, daß die Metallelektrode zum einen durchgehend und flächig elektrisch leitfähig ist, zum anderen aber durchlässig für die zwischen elektrochromem Polymer und Membran wandernden Protonen. Ohne eine solche Ionenwanderung, in diesem Falle eine Protonenwanderung, zwischen dem Festelektrolyten und dem elektrochromen Polymer durch die Metallelektrode wäre eine Farbänderung nicht möglich. Es hat sich gezeigt, daß die Forderungen bezüglich der Protonendurchlässigkeit sowie der durchgehenden und flächigen elektrischen Leitfähigkeit durch eine Metallelektrode mit einer Mindestdicke im Bereich von wenigen Nanometern erfüllt wird. Die elektrischen Kontaktierungen bzw. die Metallschicht weisen dabei vorzugsweise eine Dicke von mindestens 5 nm auf. Diese Dicke kann bis zu 30 nm je nach Anwendung variiert werden.

Bei dem elektrochromen Polymer handelt es sich in bevorzugter Ausgestaltung um Polyanilin oder ein Derivat desselben. Bei Polyanilin bzw. dessen Derivaten als elektrochromem Materia können unterschiedliche Färbungen und dadurch ein unterschiedliches Absorptionsverhalten bei den verschiedenen Wellenlängen erreicht werden, insbesondere im sichtbaren Bereich des Spektrums. Auch ist bei diesen Materialien ein transparenter Zustand erreichbar. Bei den Derivaten des Polyanilins werden die unterschiedlichen Färbungen etc. durch die Seitenketten am Polymergrundgerüst bewirkt, da diese in Abhängigkeit von der chemischen Struktur der Seitenketten unterschiedliche Absorptionseigenschaften aufweisen. Die Absorptionswellenlängen können somit verschoben werden. Auch weisen Polyanilin und dessen Derivate eine hohe Langzeitstabilität auf und übertreffen andere leitende Polymere bezüglich Haltbarkeit und Standzeit bei weitem.

Das Aufbringen des elektrisch leitenden Polymers auf die metallbeschichtete protonenleitende Membran erfolgt in bevorzugter Ausgestaltung durch Abscheidung aus einer Lösung. Die Dicke der Schicht kann dabei je nach Einsatzgebiet und Anforderungen variiert werden, da durch die Dicke jeweils auch die Farbintensität bestimmt wird. Die Dicke beträgt dabei in der Regel 3 bis 5 µm. Die Abscheidung des Polymers kann dabei beispielsweise durch Entfernen des Lösungsmittels aus der Lösung erfolgen. Es ist auch möglich, eine Lösung zu verwenden, die die Monomerbausteine des Polymers enthält. Durch elektrochemische Oxidation wird dann das Monomer zum Polymer verknüpft und schlägt sich auf der metallbeschichteten Membran nieder. In anderer bevorzugter Ausgestaltung ist vorgesehen, daß das elektrochrome Polymer durch Bedampfen auf die beschichtete Membran aufgebracht ist. Auf diese Weise ist eine gleichmäßige Beschichtung möglich.

Anstelle der Verwendung eines einzigen elektrochromen Materials ist es aber auch möglich, mehrere verschiedene elektrochrome Materialien mit unterschiedlichen Absorptionseigenschaften in einem Mehrschichtsystem übereinander aufzubringen. Auf diese Weise läßt sich ein breiterer Bereich des elektromagnetischen Spektrums abdecken, als dies für ein separates Einzelschichtsystem möglich ist. Es werden demnach mehrere Farben gleichzeitig durch diesen Mehrschichtaufbau abgedeckt.

Die elektrochrome Membraneinheit kann durch entsprechende Wahl des elektrochromen Materials sowie der Elektroden und ihrer Schichtdicken sowohl farbdeckend als auch transparent ausgeführt sein. Die Dicke der Metallschicht zur elektrischen Kontaktierung kann so weit reduziert werden, daß auch sie transparent erscheint. Bei Dicken von 5-7 nm ist dies der Fall, wobei gleichzeitig eine genügend hohe elektrische Leitfähigkeit gewährleistet ist. Beträgt die Dicke des aufgebrachten elektrochromen Polymers etwa 2 *µ*m, so besitzt das gesamte System, also die gesamte elektrochrome Einheit einen transparenten Charakter mit leichter Grünfärbung. Durch Einfärbung wird das Grün intensiviert, und bei weiterer Färbung ist eine tiefblaue Farbe erreichbar. Entsprechend ist so ein optimaler Einsatz zur Abdunkelung von Fensterscheiben, insbesondere zur Verminderung der Sonneneinstrahlung bei Gebäuden oder zum Abblenden von Spiegeln im Fahrzeugbau möglich.

Es ist auch möglich, die elektrochrome Einheit zu strukturieren, z.B. in Form von einzelnen Segmenten, die sich getrennt ansteuern lassen. Damit läßt sich z.B. ein alphanumerisches Display herstellen, analog zu den bekannten Anzeigeelementen auf LCD- oder LED-Basis. Aber auch großflächige Anzeigeelemente sind mit der elektrochromen Einheit realisierbar, da auch die Herstellung größerer Flächen (einige m²) möglich ist.

Insgesamt ist so für ein farbdeckendes oder aber transparentes elektrochromes Membransystem bzw. eine farbdeckende oder aber transparente elektrochrome Membraneinheit gesorgt, deren Farbe sich nach Wunsch verändern läßt, indem das System durch kurzzeitigen Stromfluß eingefärbt und durch Stromfluß in Gegenrichtung wieder entfärbt und damit in den Ausgangszustand zurückgebracht wird. Die Farben werden dabei durch die Höhe der angelegten Spannung und damit die Stromstärke bestimmt. Außer einer Farbänderung und damit einer Absorption von sichtbarem Licht ändert sich auch das Absorptionsverhalten im infraroten Bereich und demjenigen der Radarstrahlung. Entsprechend können solche Einheiten bzw. Systeme im Bereich der Tarnung von Objekten verwendet werden, indem deren Konturen durch Farbänderungen "verwischt" werden, so daß ihre Identifikation mittels bekannter Bilderkennungsgeräte nicht mehr möglich ist.

Die Funktionsfähigkeit der elektrochromen Schicht bleibt erhalten, obwohl diese bei dem erfindungsgemäßen neuartigen Aufbau nicht mehr zwischen den beiden Elektroden liegt und damit keinen innigen Kontakt mehr zum Elektrolyten aufweist. Die als Elektrolyt dienende protonenleitende Membran und das elektrochrome Polymer sind durch die als Elektrode dienende Metallschicht voneinander getrennt. Da die Metallschicht jedoch so dünn aufbringbar ist, daß sie beispielsweise noch optisch transparent erscheinen kann, gleichzeitig aber ihre elektrische Leitfähigkeit beibehält, können Ionen durch die Metallschicht hindurchwandern, wobei gleichzeitig die Elektronenleitung in der Schicht weiterhin gegeben ist. Auf diese Weise ist der notwendige Stoffaustausch zwischen Membran und elektrochromem Polymer ohne Beeinträchtigung der Funktion der Elektrode gegeben. Entsprechend können durch einen positiven Strompuls Ladungen in das elektrochrome Polymer injiziert und dieses dann demgemäß geladen werden. Durch die sich nun im Polymer befindlichen Ladungen wird dessen Struktur verändert. Diese Strukturveränderung hat eine Farbänderung zur Folge, deren Änderungen und Vertiefung von der Größe des Strompulses und damit der Anzahl der injizierten Ladungen abhängt, da hierdurch tiefergreifende Strukturänderungen erfolgen können. Durch einen Strompuls entgegengesetzter Richtung wird der Ladungszustand des elektrochromen Polymers rückgängig gemacht und die ursprüngliche Farbe wiederhergestellt. Der Stromtransport zwischen den beiden Elektroden durch den Festionenleiter erfolgt während des Lade- und Entladevorgangs durch Protonenwanderung. Durch eine hohe Mobilität der Protonen in der Membran und einen geringen Widerstand kann die Betriebsspannung der elektrochromen Einheit herabgesetzt werden und die Ansprechzeit erhöht werden.

Weitere Vorteile und Merkmale der Erfindung ergeben sich aus den Ansprüchen und aus der nachfolgenden Beschreibung, in der ein Ausführungsbeispiel unter Bezugnahme auf die beigefügten Zeichnungen im einzelnen erläutert ist. Dabei zeigt:
- Fig. 1: eine schematische und perspektivische Ansicht einer erfindungsgemäßen elektrochromen Einheit;
- Fig. 2: ein Transmissionsspektrum für eine elektrochrome Einheit bei unterschiedlichen Reduktions- und Oxidationszuständen des elektrochromen Polymers; und
- Fig. 3: die Strukturänderung eines elektrochromen Polymers bei Zufuhr oder Entzug von Protonen und Ladungen.

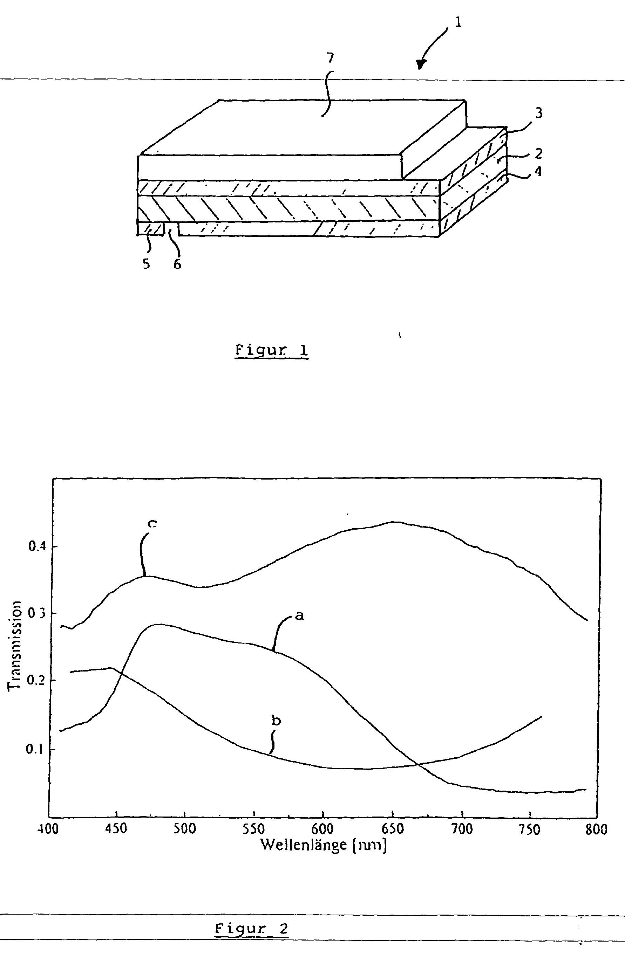

Die in Fig. 1 schematisch dargestellte elektrochrome Einheit 1 weist zunächst eine als Folie ausgebildete protonenleitende Membran (PEM-Membran) 2 auf, die an ihrer Ober- und Unterseite jeweils mit elektrischen Kontaktierungen 3, 4, 5 versehen ist. Diese elektrischen Kontaktierungen bzw. Elektroden 3, 4 verlaufen parallel zueinander und sind in Form einer dünnen Schicht auf die Membran 2 aufgetragen. An der Unterseite der protonenleitenden Membran 2 ist im dargestellten Ausführungsbeispiel von der Elektrode 4 durch einen Spalt 6 getrennt eine Bezugselektrode 5 angeordnet. Auf der oberen Elektrode 3 ist auf ihrer der Membran 2 abgewandten Seite das elektrochrome Polymer 7 aufgebracht. Die Dicke der zwischen dem elektrochromen Polymer 7 und der protonenleitenden Membran 2 angeordneten Elektrode 3 ist dabei derart gewählt, daß die Elektrode zum einen durchgehend und flächig elektrisch leitfähig ist, zum anderen aber eine ausreichende Durchlässigkeit für die Protonen besitzt. Hierzu beträgt die Dicke der die Elektrode 3 bildenden Metallbeschichtung wenige Nanometer. Bei dem elektrochromen Polymer 7 kann es sich um einen Mehrschichtaufbau aus verschiedenen Materialien oder aber um ein Einschichtsystem handeln.

In Fig. 2 ist ein Transmissionsspektrum für Polyanilin als elektrochromem Material dargestellt. Die unterschiedlichen Graphen a, b und c stellen dabei das Polyanilin in unterschiedlichen Oxidations- und Reduktionszuständen dar. Wie sich aus Fig. 2 ergibt, weist das Polyanilin im teiloxidierten Zustand zwischen 475 und 575 nm ein Transmissionsmaximum, also Absorptionsminimum auf. Durch weitere Oxidation verschiebt sich dieses Absorptionsverhalten, so daß das Material im volloxidierten Zustand (Graph b) in diesem Bereich stark absorbierend wirkt. Durch Reduktion, also Stromumkehr (Graph c) wirkt das nun reduzierte Polyanilin für das einfallende Licht "transparent". Es weist über den gesamten dargestellten Wellenlängenbereich eine hohe Transmission auf. Dieses Verhalten wird durch die Farbänderung des elektrochromen Materials für den Betrachter der elektrochromen Einheit auch nach außen hin sichtbar.

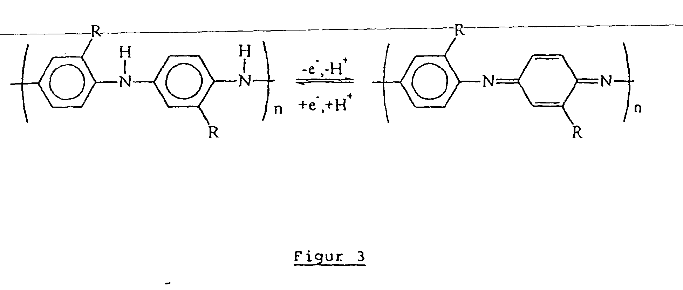

In Fig. 3 ist nun die Strukturänderung eines elektrochromen Polymers (Polyanilin) unter Ladungszufuhr und -abzug deutlich ersichtlich. Das dargestellte Polyanilin weist bei seiner links dargestellten Struktur, bei der der Rest R für Wasserstoff H, Alkyl, Alkoxy etc. stehen kann, eine transparente oder gelbe Färbung auf. In diesem ungeladenen Zustand (linke Struktur) ist das konjugierte Doppelbindungssystem im Polyanilin voll ausgebildet und absorbiert elektromagnetische Strahlung einer bestimmten Wellenlänge. Durch Elektronenentzug, beispielsweise durch eine außen angelegte Spannung, und damit Entfernen des Wasserstoffs (Abspalten vom Stickstoff N) aus dem Polyanilin verändert sich die Farbe des Materials in grün bzw. blau. Durch den Elektronenentzug bleiben nun positive Ladungen auf der Polymerkette zurück. Das konjugierte Doppelbindungssystem des Polyanilin mit aromatischem Charakter geht in ein chinoides System (rechte Struktur) über. Die durch das Wasserstoffatom am Stickstoff gegebene positive Ladung kann nun entlang der Molekülkette wandern. Das auf diese Weise entstandene chinoide System besitzt andere Absorptionseigenschaften und erscheint demgemäß in einer anderen Farbe. Werden dem Material die Elektronen durch Stromumkehr wiederum zugeführt, so lagert sich das Wasserstoffatom wiederum am Stickstoff an, und das elektrochrome Material erhält wiederum seine Ausgangsfarbe. Dieser reversible Vorgang kann beliebig häufig wiederholt werden. Je nach Größe des Strompulses und damit Anzahl der injizierten Ladungen können mehr oder weniger Wasserstoffatome vom Stickstoff abgespalten werden, wodurch sich die Farbe weiter verändern und vertiefen kann.

## Patentansprüche

1. Elektrochrome Einheit (1) mit einer elektrochemischen Zelle, mit zumindest einer ersten und einer zweiten Elektrode (3, 4), einem zwischen den Elektroden (3, 4) angeordneten Ionenleiter sowie mit einem elektrochromen Material (7), wobei der Ionenleiter einen Feststoffelektrolyt aufweist und die Elektroden (3, 4) auf beiden Seiten des Feststoffelektrolyts in Form von Metallelektroden angeordnet sind, wobei das elektrochrome Material (7) auf der dem Ionenleiter abgewandten Seite der ersten Elektrode (3) angeordnet ist, **dadurch gekennzeichnet, daß** der Ionenleiter eine protonenleitende Membran (2) ist, wobei die Membran (2) Träger für die beidseitig auf ihr aufgebrachten Elektroden (3, 4) ist, und daß die Dicke der zwischen dem elektrochromen Material (7) und der protonenleitenden Membran (2) angeordneten ersten Elektrode (3) derart gewählt ist, daß die erste Elektrode (3) zum einen durchgehend und flächig elektrisch leitfähig ist, zum anderen aber eine ausreichende Durchlässigkeit für Protonen besitzt.

2. Einheit nach Anspruch 1, **dadurch gekennzeichnet, daß** die Dicke der ersten Elektrode (3) zwischen 5 nm und 30 nm beträgt.

3. Einheit nach Anspruch 1 oder 2, **dadurch gekennzeichnet, daß** die erste Elektrode (3) transparent ist.

4. Einheit nach Anspruch 3, **dadurch gekennzeichnet, daß** die Dicke der ersten Elektrode (3) zwischen 5 nm und 7 nm beträgt.

5. Einheit nach einem der Ansprüche 1 bis 4, **dadurch gekennzeichnet, daß** die protonenleitende Membran (2) in Form einer festen Folie ausgebildet ist.

6. Einheit nach einem der Ansprüche 1 bis 5, **dadurch gekennzeichnet, daß** das Metall der Elektroden (3, 4) Gold ist.

7. Einheit nach einem der Ansprüche 1 bis 5, **dadurch gekennzeichnet, daß** das Metall der Elektroden (3, 4) Platin ist.

8. Einheit nach einem der Ansprüche 1 bis 7, **dadurch gekennzeichnet, daß** die Elektroden (3, 4) auf die Membran (2) durch Bedampfen aus einer Gasphase aufgebracht sind.

9. Einheit nach einem der Ansprüche 1 bis 8, **dadurch gekennzeichnet, daß** das elektrochrome Material (7) ein elektrochromes Polymer ist.

10. Einheit nach Anspruch 9, **dadurch gekennzeichnet, daß** das Polymer (7) Polyanilin ist.

11. Einheit nach Anspruch 9 oder 10, **dadurch gekennzeichnet, daß** das Polymer (7) ein Derivat des Polyanilins ist.

12. Einheit nach einem der Ansprüche 9 bis 11, **dadurch gekennzeichnet, daß** das elektrochrome Polymer (7) auf die beschichtete Membran (2) durch Abscheidung aus einer Lösung aufgebracht ist.

13. Einheit nach einem der Ansprüche 9 bis 11, **dadurch gekennzeichnet, daß** das elektrochrome Polymer (7) durch Bedampfen auf die beschichtete Membran (2) aufgebracht ist.

14. Einheit nach einem der Ansprüche 1 bis 13, **gekennzeichnet durch** ein Mehrschichtsystem aus mehreren, verschiedenen elektrochromen Polymeren als elektrochromem Material.

## Claims

1. Electrochromic unit (1) with an electrochemical cell, with at least a first and a second electrode (3, 4), an ionic conductor arranged between the electrodes (3, 4) and also with an electrochromic material (7), wherein the ionic conductor has a solid electrolyte and the electrodes (3, 4) are arranged on both sides of the solid electrolyte in the form of metal electrodes, wherein the electrochromic material (7) is arranged on the side of the first electrode (3) remote from the ionic conductor, **characterised in that** the ionic conductor is a proton-conducting membrane (2), wherein the membrane (2) is a support for the electrodes (3, 4) attached to it on both sides, and that the thickness of the first electrode (3) arranged between the electrochromic material (7) and the proton-conducting membrane (2) is selected in such a way that the first electrode (3) is electrically conductive continuously and over a large surface, while also having a sufficient permeability for protons.

2. Unit according to Claim 1, **characterised in that** the thickness of the first electrode (3) amounts to between 5 nm and 30 nm.

3. Unit according to Claim 1 or 2, **characterised in that** the first electrode (3) is transparent.

4. Unit according to Claim 3, **characterised in that** the thickness of the first electrode (3) lies between 5 nm and 7 nm.

5. Unit according to one of Claims 1 to 4, **characterised in that** the proton-conducting membrane (2) is configured in the form of a solid foil.

6. Unit according to one of Claims 1 to 5, **characterised in that** the metal of the electrodes (3, 4) is gold.

7. Unit according to one of Claims 1 to 5, **characterised in that** the metal of the electrodes (3,4) is platinum.

8. Unit according to one of Claims 1 to 7, **characterised in that** the electrodes (3, 4) are applied to the membrane (2) by vapour deposition from a gas phase.

9. Unit according to one of Claims 1 to 8, **characterised in that** the electrochromic material (7) is an electrochromic polymer.

10. Unit according to Claim 9, **characterised in that** the polymer (7) is polyaniline.

11. Unit according to Claim 9 or 10, **characterised in that** the polymer (7) is a derivative of the polyaniline.

12. Unit according to one of Claims 9 to 11, **characterised in that** the electrochromic polymer (7) is applied to the coated membrane (2) by separation from a solution.

13. Unit according to one of Claims 9 to 11, **characterised in that** the electrochromic polymer (7) is applied to the coated membrane (2) by vapour deposition.

14. Unit according to one of Claims 1 to 13, **characterised by** a multilayered system comprising several different electrochromic polymers as electrochromic material.

## Revendications

1. Unité électrochrome (1) comprenant une cellule électrochimique, au moins une première et une deuxième électrode (3, 4), un conducteur d'ions disposé entre les électrodes (3, 4) ainsi qu'un matériau électrochrome (7), dans laquelle le conducteur d'ions présente un électrolyte en matière solide et les électrodes (3,4) sont disposées des deux côtés de l'électrolyte en matière solide sous forme d'électrodes en métal, le matériau électrochrome (7) étant disposé sur la face de la première électrode (3) éloignée du conducteur d'ions,
**caractérisée en ce que**
le conducteur d'ions est une membrane conductrice de protons (2), cette membrane (2) constituant un support pour les électrodes (3, 4) qui sont disposées sur chacune de ses faces, et l'épaisseur de la première électrode (3) prévue entre le matériau électrochrome (7) et la membrane conductrice de protons (2) est choisie de manière que la première électrode (3), d'une part, soit conductrice d'électricité de bout en bout et sur toute la surface, mais d'autre part possède une perméabilité suffisante aux protons.

2. Unité selon la revendication 1,
**caractérisée en ce que**
l'épaisseur de la première électrode (3) est de 5 nm à 30 nm.

3. Unité selon la revendication 1 ou 2,
**caractérisée en ce que**
la première électrode (3) est transparente.

4. Unité selon la revendication 3,
**caractérisée en ce que**
l'épaisseur de la première électrode (3) est de 5 nm à 7 nm.

5. Unité selon l'une des revendications 1 à 4,
**caractérisée en ce que**
la membrane conductrice de protons (2) est une feuille solide.

6. Unité selon l'une des revendication 1 à 5,
**caractérisée en ce que**
le métal des électrodes (3, 4) est de l'or.

7. Unité selon l'une des revendications 1 à 5,
**caractérisée en ce que**
le métal des électrodes (3, 4) est du platine.

8. Unité selon l'une des revendications 1 à 7,
**caractérisée en ce que**
les électrodes (3, 4) sont posées sur la membrane (2) par métallisation à partir d'une phase gazeuse.

9. Unité selon l'une des revendications 1 à 8,
**caractérisée en ce que**
le matériau électrochrome (7) est un polymère électrochrome.

10. Unité selon la revendication 9,
**caractérisée en ce que**
le polymère (7) est de la polyaniline.

11. Unité selon la revendication 9 ou 10,
**caractérisée en ce que**
le polymère (7) est un dérivé de la polyaniline.

12. Unité selon l'une des revendications 9 à 11,
**caractérisée en ce que**
le matériau électrochrome (7) est déposé sur la membrane revêtue (2) par séparation à partir d'une solution.

13. Unité selon l'une des revendications 9 à 11,
**caractérisée en ce que**
le matériau électrochrome (7) est déposé par vaporisation sur la membrane revêtue (2).

14. Unité selon l'une des revendications 1 à 13,
**caractérisée par**
un système multicouches constitué de plusieurs polymères électrochromes différents formant le matériau électrochrome.
